# EUROPÄISCHE PATENTSCHRIFT

(11) **EP 0 850 809 B1**
(45) Veröffentlichungstag und Bekanntmachung des Hinweises auf die Patenterteilung: **08.05.2002**
(21) Anmeldenummer: 97122208.8
(22) Anmeldetag: 16.12.1997
(51) Int. Cl.: B60R 22/22

(54) **Halter für ein Gurtschloss eines Sicherheitsgurtes**
Buckle stalk for a safebelt
Tige support de boucle de ceinture de sécurité

(30) Priorität: 24.12.1996 DE 19654277
(43) Veröffentlichungstag der Anmeldung: 01.07.1998
(73) Patentinhaber: TAKATA (EUROPE) VEHICLE SAFETY TECHNOLOGY GmbH, D-89081 Ulm (DE)
(72) Erfinder: Pleyer, Matthias, 89250 Senden (DE)
(74) Vertreter: Maikowski, Michael, Dipl.-Ing. Dr.

(56) Entgegenhaltungen:
- DE-U- 29 609 436
- US-A- 4 208 778
- US-A- 4 645 231

## Beschreibung

Die vorliegende Erfindung betrifft einen Halter für ein Gurtschloß eines Sicherheitsgurtes nach dem Oberbegriff des Anspruchs 1.

Gurtschloßhalter sind grundsätzlich bekannt und dienen dazu, das Gurtschloß eines Sicherheitsgurtes mit einem Fahrzeug bzw. einer Sitzstruktur zu verbinden. Eine bekannte Ausführungsform eines solchen Halters besteht aus einem starren Stahlbügel, der keine Relativbewegung zuläßt. Aus diesem Grund ist es notwendig, im Schloßkopf ein separates Federsystem vorzusehen, um dessen Beweglichkeit zu ermöglichen.

Ein weiterer bekannter Halter eines Gurtschlosses besteht aus einem Stahlseil, das mit dem Gurtschloß verbunden und an der Sitzstruktur über einen Endbeschlag befestigt ist. Diese bekannte Lösung ist verhältnismäßig teuer, da der Endbeschlag insbesondere bei komplizierten Anbindungsgeometrien in der Herstellung aufwendig ist und zudem auch Festigkeitsprobleme verursachen kann.

Aus der DE 296 09 436 U1 ist eine Verankerung für ein Gurtschloß eines Sicherheitsgurtes bekannt, bei der der Halter, mit dem das Gurtschloß am Fahrzeug befestigt ist, aus mehreren Lamellen gebildet ist. Die flach aneinander anliegenden Lamellen, die sowohl am Gurtschloß als auch am Fahrzeug starr befestigt sind, sollen eine Bewegung des Gurtschlosses quer zu den Flachseiten der Lamellen ermöglichen, wobei die Lamellen mit Hilfe eines zusätzlichen biegsamen Beschlagteils bei einer Biegung des Halters in eine vorgegebene Biegerichtung elastisch vorgespannt werden.

Es ist Aufgabe der vorliegenden Erfindung, einen Halter der eingangs genannten Art so weiterzubilden, daß der Halter in sich formstabil ist und gleichzeitig eine ausreichend hohe Flexibilität besitzt.

Die Lösung dieser Aufgabe erfolgt durch die Merkmale des Anspruchs 1.

Der Halter besteht aus mehreren Lamellen, die miteinander verbunden sind. Hierdurch ergibt sich eine Anbindung des Gurtschlosses an der Sitzstruktur, die eine hervorragende Festigkeit aufweist und gleichzeitig eine gewisse Flexibilität besitzt, um Relativbewegungen zu ermöglichen. Erfindungsgemäß sind die Lamellen hierzu an einer Stelle derart miteinander verbunden, daß an dieser eine begrenzte Bewegung der Lamellen senkrecht zur Verbindungsrichtung möglich ist. Eine solche Verbindung unterstützt die Flexibilität des Lamellenpaketes, da an der Verbindungsstelle eine Relativbewegung zwischen einzelnen Lamellen möglich ist.

Vorteilhafte Ausführungsformen der Erfindung sind in der Beschreibung, den Zeichnungen und den Unteransprüchen beschrieben.

Nach einer ersten vorteilhaften Ausführungsform der Erfindung sind die Lamellen gekrümmt oder geknickt. Hierdurch läßt sich das Gurtschloß auch bei ungünstigen Einbauverhältnissen so anordnen, daß es an einer gut erreichbaren Stelle liegt. Gleichzeitig geht durch die gekrümmte oder geknickte Ausbildung des Lamellenpaketes dessen Flexibilität nicht verloren.

Nach einer weiteren Ausbildung der Erfindung sind die Lamellen von einer Umhüllung, beispielsweise einem Schrumpfschlauch umgeben. Hierdurch ergibt sich einerseits eine ansprechende Optik, andererseits wird eine Verletzungsgefahr verringert. Darüber hinaus kann das Lamellenpaket bei dieser Ausführungsform vorgefertigt werden, was die weitere Montage erleichtert.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Figur 1: eine perspektivische Ansicht eines erfindungsgemäßen Halters mit daran angebrachtem Gurtschloß;
- Figur 2: eine Explosionsansicht des Halters von Figur 1; und
- Figur 3: eine Detaildarstellung einer Befestigungsaussparung.

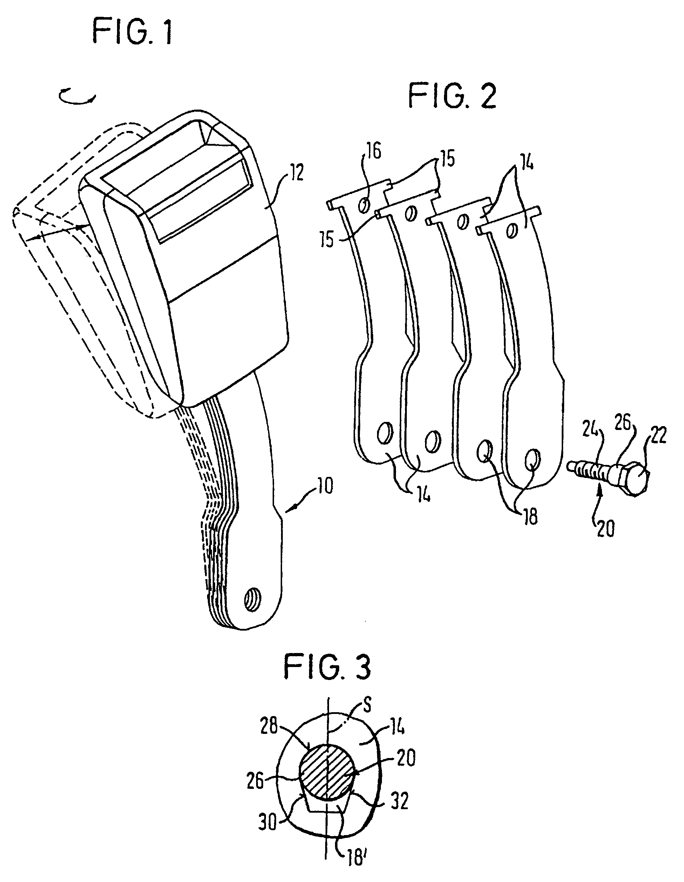

Figur 1 zeigt eine perspektivische Ansicht des erfindungsgemäßen Halters 10, an dessen vorderem Ende ein Gurtschloß 12 befestigt ist.

Wie insbesondere in Figur 2 zu erkennen ist, besteht der Halter 10 aus vier gleichartig ausgebildeten Lamellen 14, die zu einem Lamellenpaket bzw. einem Federpaket verbunden sind. Jede einzelne Lamelle 14 ist im Längsschnitt gesehen gekrümmt ausgebildet.

Jede Lamelle 14 besitzt eine obere Befestigungsaussparung 16 und eine untere Befestigungsaussparung 18. Die einzelnen Lamellen 14 sind über eine nicht dargestellte Nietverbindung einerseits miteinander und andererseits mit dem Gurtschloß 12 verbunden, wobei die Nietverbindung durch die oberen Befestigungsaussparungen 16 geführt ist. Durch die unteren Befestigungsaussparungen 18, die genauso wie die oberen Befestigungsaussparungen 16 miteinander fluchten, läßt sich eine Schraube 20 führen, um den Halter an einer Sitzstruktur zu befestigen. Wie Figur 2 zeigt, weist die Schraube einen Kopf 22, ein Gewinde 24 und zwischen Kopf und Gewinde einen zylindrischen Schaftabschnitt 26 auf. Der Schaftabschnitt 26 besitzt eine axiale Länge, die der Dicke der einzelnen Lamellen 14 entspricht, wobei für eine Befestigung mit Vorspannung zusätzlich ein Federring auf die Schraube 20 aufgesteckt werden kann.

Wie Figur 2 ferner zeigt, sind die Lamellen 14 in ihrem unteren Drittel, daß heißt im Bereich der unteren Befestigungsaussparung 18 verbreitert ausgebildet, um im Bereich der Anbindung an die Sitzstruktur eine erhöhte Festigkeit zu geben. In diesem Bereich sind ferner an der innersten Lamelle (nicht dargestellte) Anschlagstifte vorgesehen, die in entsprechende Aussparungen an der Sitzstruktur eingreifen und eine Bewegung um die Achse der Schraube 20 begrenzen. An ihrem oberen Ende sind die Lamellen 14 mit seitlichen Verbreiterungen 15 versehen, die für eine verbesserte Anlage innerhalb des Gurtschlosses sorgen.

Nach Befestigung des erfindungsgemäßen Halters an einer Sitzstruktur mit Hilfe einer Befestigungsschraube 20 läßt sich das daran angebrachte Gurtschloß 12 sowohl in Befestigungsrichtung wie auch rotatorisch etwas bewegen, da das Lamellenpaket eine gewisse Flexibilität besitzt. Durch die fertigungsbedingten Toleranzen im Bereich der oberen Befestigung sowie der unteren Befestigung der Lamellen ist eine Relativbewegung der einzelnen Lamellen zueinander möglich.

Figur 3 zeigt eine weitere Ausführungsform einer Befestigungsaussparung 18', welche für eine verbesserte Relativbewegung der einzelnen Lamellen sorgt. Die dargestellte Befestigungsaussparung 18' weist einen gekrümmten Wandabschnitt 28 auf, an den sich zu beiden Seiten der Symmetrielinie S zwei konvergierende Wandabschnitte 30, 32 anschließen. Der zylindrische Schaftabschnitt 26 der Schraube 20 befindet sich dabei innerhalb des gekrümmten Wandabschnittes 28.

Bei dieser Ausführungsform legt sich die Schraube 20 mit ihrem zylindrischen Schaftabschnitt 26 an die konvergierenden Wandabschnitte 30, 32 an, wodurch diese einerseits Last aufnehmen, andererseits sich unter Last verformen können. Im Falle eines Unfalls sorgt die plastische Verformung im Bereich der Befestigungsaussparung 18' für eine Begrenzung der aufzunehmenden Zuglast an der äußersten Lamelle. Gleichzeitig wird dadurch die Zuglast auf sämtliche Lamellen verteilt.

Die Lamellen des erfindungsgemäßen Halters sind vorzugsweise Stahlfederlamellen. Durch entsprechende Wahl der Anzahl und der Stärke der Lamellen läßt sich die Federeigenschaft des erfindungsgemäßen Halters variieren. Ein insbesondere durch die Relativbewegung der Lamellen erforderlicher Korrosionsschutz läßt sich durch Korrosionsschutzmittel oder durch geeignete Werkstoffauswahl für die Lamellen erzielen.

## Patentansprüche

1. Halter für ein Gurtschloß (12) eines Sicherheitsgurtes, bestehend aus mehreren miteinander verbundenen Lamellen (14), die mit einer Befestigungsaussparung (16, 18) versehen sind,
**dadurch gekennzeichnet,**
**daß** die Befestigungsaussparung (16, 18) als Langloch ausgebildet ist, und daß die Lamellen (14) im Bereich des Langlochs miteinander verbunden sind, so daß eine begrenzte Bewegung der Lamellen (14) senkrecht zur Verbindungsrichtung möglich ist.

2. Halter nach Anspruch 1,
**dadurch gekennzeichnet,**
**daß** die Lamellen an einem Ende mit dem Gurtschloß (12) vernietet sind.

3. Halter nach zumindest einem der vorstehenden Ansprüche,
**dadurch gekennzeichnet,**
**daß** die Lamellen (14) gekrümmt oder geknickt sind.

4. Halter nach zumindest einem der vorstehenden Ansprüche,
**dadurch gekennzeichnet,**
**daß** die Lamellen (14) von einer Umhüllung, vorzugsweise einem Schumpfschlauch, umgeben sind.

## Claims

1. Holder for a belt lock (12) of a safety belt, comprising a plurality of mutually connected leaves (14) which are provided with a securing cut-out (16, 18), **characterized in that** the securing cut-out (16, 18) is formed as an elongate opening; and **in that** the leaves (14) are mutually connected in the region of the elongate opening such that a restricted movement of the leaves (14) is possible perpendicular to the direction of connection.

2. Holder in accordance with claim 1, **characterized in that** the leaves are riveted to a belt lock (12) at one end.

3. Holder in accordance with at least one of the preceding claims, **characterized in that** the leaves (14) are curved or kinked.

4. Holder in accordance with at least one of the preceding claims, **characterized in that** the leaves (14) are surrounded by a sheath, preferably a shrinkable hose.

## Revendications

1. Elément support pour une serrure (12) d'une ceinture de sécurité, constitué par plusieurs lamelles (14) reliées entre elles et pourvues d'une échancrure de fixation (16, 18), **caractérisé en ce que** l'échancrure de fixation (16, 18) est ménagée sous forme de trou oblong, et **en ce que** les lamelles (14) sont reliées entre elles dans la zone dû trou oblong, de sorte qu'un mouvement limité des lamelles (14) est possible perpendiculairement à la direction de liaison.

2. Elément support selon la revendication 1, **caractérisé en ce que** les lamelles sont rivetées à une extrémité avec la serrure de ceinture (12).

3. Elément support selon l'une au moins des revendications précédentes, **caractérisé en ce que** les lamelles (14) sont recourbées ou repliées.

4. Elément support selon l'une au moins des revendications précédentes, **caractérisé en ce que** les lamelles (14) sont entourées par une enveloppe, de préférence une gaine rétractable.
